# FASCICULE DE BREVET EUROPEEN

(11) **EP 1 477 607 B1**
(45) Date de publication et mention de la délivrance du brevet: **08.04.2009**
(21) Numéro de dépôt: 04300270.8
(22) Date de dépôt: 12.05.2004
(51) Int. Cl.: D21B 1/32, D21F 1/70

(54) **Procédé de désencrage de pâte à papier et cellule de flottation utilisée pour ce procédé**
Verfahren zum Deinken von Papierzellstoff und Flotationsvorrichtung zur Duchführung des Verfahrens
Process for de-inking paper pulp and flotation cell used for this process

(30) Priorité: 15.05.2003 FR 0305814; 27.04.2004 FR 0450806
(43) Date de publication de la demande: 17.11.2004
(73) Titulaire: KADANT LAMORT, 51300 VITRY LE FRANCOIS (FR)
(72) Inventeur: Serres, Alain, 51100 Reims (FR); Lacour, Xavier, 51300 Vitry le Francois (FR); Pottier, Stephan, 51300 Frignicourt (FR)
(74) Mandataire: Rhein, Alain

(56) Documents cités:
- EP-A- 0 198 737
- EP-A- 0 674 040
- EP-A- 1 001 078
- WO-A-92/17260

## Description

La présente invention concerne un procédé de désencrage de pâte à papier et une cellule de flottation utilisée pour ce procédé.

La présente invention concerne plus particulièrement le désencrage de la pâte à papier provenant de vieux papiers que l'on veut réutiliser.

Les vieux papiers sont tout d'abord mis en l'état de pâte par un appareil appelé communément pulpeur et cette pâte est ensuite débarrassée de ses divers corps étrangers, appelés contaminants, en la faisant passer à travers des tamis. Cependant, après cette élimination des contaminants, la pâte contient des particules d'encre qu'il faut éliminer pour obtenir un papier de qualité.

La pâte débarrassée des corps étrangers grossiers comporte trois types de composants, à savoir les fibres, les fines qui sont le complément aux fibres de la partie non minérale, et les charges qui constituent la partie minérale qui reste.

Une des étapes du traitement de la pâte à papier est le désencrage qui en général comprend l'injection de l'air dans la pâte afin de créer des bulles d'air aux parois desquelles les particules d'encre viennent se fixer. Par cette opération d'aération on fait apparaître à la surface de la pâte à papier une mousse constituée de bulles dont les parois retiennent des particules d'encre. Cette mousse est ensuite évacuée.

D'une manière générale, pour augmenter la probabilité de captation des particules d'encre, on favorise le temps de contact entre la pâte et les bulles et dans ce but, il est souhaitable d'avoir un flux de bulles et de pâte qui se mélangent le plus tôt possible, et des bulles qui restent le plus longtemps possible dans le flux de pâte. Une petite taille des bulles permet aussi de favoriser cette probabilité de captation.

Pour optimiser le traitement en fonction de ces connaissances, on connaît de la demande de brevet français FR 9402886 de la demanderesse un procédé de désencrage au moyen de bulles d'air consistant à créer dans une enceinte, par recirculations successives de la pâte d'étage en étage du haut vers le bas de l'enceinte, un mouvement descendant de la pâte à papier, ce mouvement étant croisé par un mouvement ascendant de bulles de sorte qu'à chaque étage, le courant de pâte soit traversé par un courant de bulles pratiquement perpendiculaire au courant de pâte.

Ce procédé est mis en oeuvre dans une cellule de flottation dont le rôle principal est l'élimination de l'encre et l'extraction de la mousse formée en surface. Cependant, même si les bulles d'air capturent les particules d'encre qui sont hydrophobes, elles entraînent également quelques fibres qui sont alors éliminées avec les mousses.

Afin de limiter les pertes en fibres lors de ce traitement par flottation, la demanderesse propose dans sa demande de brevet français FR 9 715 839 un procédé à contre-lavage des bulles par une alimentation en eau dans la partie haute de l'enceinte de la cellule de flottation.

De même, dans le brevet européen EPO 674 040, il est proposé, à chaque étage, des entrées/sorties vers un système de recyclage de la pâte à papier, chaque système de recyclage étant pourvu d'une pompe pour réinjecter la pâte à papier vers l'étage inférieur. Le pompage provoque l'accélération de la vitesse de la pâte à papier pour atteindre la vitesse nécessaire au fonctionnement du dispositif.

Même si ces cellules de flottation donnent en général satisfaction, leur consommation d'énergie est relativement importante. Par ailleurs, la plus grande partie des déchets est produite lors de la flottation et il serait souhaitable de réduire ces déchets qui en général sont composés de 10% de fibres, de 30% de fines et de 60% de charges. C'est surtout la perte en fibres qu'il faudrait limiter de manière à économiser la matière première noble.

Ainsi, l'invention a pour but de proposer un procédé et une cellule de flottation permettant de réduire la consommation d'énergie, de limiter les rejets, mais aussi de permettre une plus grande modularité que ce qui est le cas des cellules actuelles.

Un objet de l'invention est un procédé de désencrage de pâte à papier dans lequel la pâte à désencrer est mise en circulation dans une cellule de flottation comportant une enceinte à axe vertical, la pâte se déplaçant du haut vers le bas en passant successivement par une pluralité d'étages dans chacun desquels elle est traversée par des bulles d'air introduites dans la partie basse de l'enceinte et qui se déplacent de bas en haut en passant par des passages de bulles prévus entre les étages successifs, les bulles se mélangeant avec la pâte et se séparant de nouveau de celle-ci dans chaque étage pour former, arrivées en haut, une mousse chargée de particules hydrophobes qui est évacuée, la pâte à papier désencrée étant évacuée en partie basse de l'enceinte, et lors de son déplacement du haut vers le bas, guidée par des moyens de guidage s'étendant de part et d'autre de l'axe de ladite enceinte de manière à former un chemin de guidage dans lequel lesdits passages de bulles sont prévus, les bulles étant, à l'intérieur de chaque étage, susceptibles de remonter en suivant la face inférieure desdits moyens de guidage de manière à arriver dans lesdits passages de bulles pour passer à un niveau supérieur, caractérisé par le fait qu'on crée une accélération de la vitesse de la pâte à l'endroit desdits passages de bulles pour ainsi aspirer les bulles sortant desdits passages pour les mélanger avec la pâte, ladite accélération de la pâte étant obtenue en réduisant progressivement la section de passage de la pâte sur lesdits moyens de guidage immédiatement en amont desdits passages de bulles.

Selon d'autres caractéristiques de l'invention :
- le rapport entre la vitesse de circulation des bulles et la vitesse de circulation de la pâte est avantageusement comprise entre 0,5 et 2, de préférence entre 0,7 et 1,3 ;
- on dispose lesdits moyens de guidage de manière à former un chemin de guidage qui présente la forme d'un évasement au moins sur une portion s'étendant en aval desdits passages de bulles.
- on dispose lesdits moyens de guidage de manière à former un chemin de guidage de section sensiblement constante au moins sur une portion s'étendant en aval desdits passages de bulles ;
- on dispose lesdits moyens de guidage de manière à former un chemin de guidage qui est ascendant dans le sens d'écoulement de la pâte et qui s'étend au moins sur une portion en aval desdits passages de bulles ;
- on dispose lesdits moyens de guidage de manière à former un chemin de guidage hélicoïdal ;
- on dispose lesdits moyens de guidage de manière à former un chemin de guidage en zigzag ;
- on concentre les bulles dégagées de la pâte dans un espace libre prévu immédiatement en dessous de chaque passage de remontée de bulles ;
- on empêche la remontée des bulles immédiatement derrière lesdits passages de bulles pour obliger les bulles à passer directement par lesdits passages ;
- dans chaque étage, les bulles d'air sortant desdits passages de bulles sont réparties sur toute la largeur du chemin de guidage de la pâte;
- on dévie, avant son arrivée en bas, toute ou partie de la pâte vers un circuit de recirculation pour la réinjecter dans ladite partie basse de l'enceinte, lesdites bulles étant en outre séparées de la pâte réinjectée dans une zone de séparation définie dans ladite partie basse de l'enceinte ;
- ledit circuit de recirculation dans lequel on fait recirculer la pâte comprend un château de pâte ;
- on évacue la pâte désencrée par une sortie principale en bas de ladite enceinte, ladite sortie principale étant mise en communication avec un élément tubulaire central par lequel la pâte est susceptible de monter ;
- la pâte désencrée est de nouveau alimentée vers ledit château de pâte qui fournit les acceptés finaux ;
- on place plusieurs cellules en batterie en les reliant à un circuit de recirculation commun ;
- on relie l'ensemble des cellules à un château de pâte auxiliaire commun que l'on utilise pour répartir la pâte à désencrer avant de d'alimenter lesdites cellules.

Un autre objet de l'invention est une enceinte à axe vertical comportant dans sa partie haute une entrée principale pour la pâte à désencrer et dans sa partie basse une sortie principale pour évacuer la pâte désencrée, la pâte se déplaçant du haut vers le bas en passant par des étages successifs pourvus de passages de bulles introduites dans la partie basse de l'enceinte et qui passent par lesdits passages d'un étage à un étage supérieur tout en se mélangeant de nouveau avec la pâte, lesdites bulles montant jusque dans la partie haute dans laquelle elles forment une mousse chargée de particules hydrophobes et évacuée par une sortie d'évacuation de mousse, ladite cellule comportant des moyens de guidage de la pâte s'étendant de part et d'autre de l'axe de ladite enceinte de manière à former un chemin de guidage de la pâte et dans lesquels lesdits passages de bulles sont prévus, lesdits moyens de guidage étant sur leur face inférieure inclinés vers le haut pour le guidage des bulles dégagées de la pâte vers lesdits passages de bulles, caractérisée par le fait que ladite cellule comporte des organes de rétrécissement s'étendant à l'intérieur du chemin de guidage de manière à réduire progressivement la section de passage de la pâte immédiatement en amont desdits passages de bulles de chaque étage de la cellule, afin de créer une accélération de la vitesse de la pâte à l'endroit desdits passages de bulles pour ainsi aspirer les bulles sortant desdits passages pour les mélanger avec la pâte.

Selon d'autres caractéristiques de l'invention :
- ledit chemin de guidage formé par lesdits moyens de guidage a une forme hélicoïdale ;
- ledit chemin de guidage formé par lesdits moyens de guidage a section sensiblement constante au moins sur une portion s'étendant en aval desdits passages de bulles ;
- ledit chemin de guidage formé par lesdits moyens de guidage est ascendant dans le sens d'écoulement de la pâte et s'étend au moins sur une portion en aval desdits passages de bulles ;
- ledit chemin de guidage formé par lesdits moyens de guidage a une forme en zigzag ;
- la cellule comporte des organes de rétrécissement s'étendant à l'intérieur du chemin de guidage de manière à réduire progressivement la section de passage de la pâte immédiatement en amont desdits passages de bulles de chaque étage de la cellule ;
- les bulles dégagées de la pâte sont concentrées dans un espace libre prévu dans chaque étage immédiatement en dessous de chaque passage de remontée de bulles ;
- la cellule comporte un organe formant obstacle à la remontée des bulles disposé sur la face inférieure desdits moyens de guidage immédiatement derrière lesdits passages de bulles ;
- ledit organe formant obstacle relie la face supérieure desdits organes de rétrécissement à la face inférieure des moyens de guidage ;
- les passages de bulles comprennent dans chaque étage au moins une entrée de bulles sur la face inférieure des moyens de guidage, et au moins une sortie de bulles sur la face supérieure de ceux-ci, ladite sortie de bulles étant décalée vers l'aval par rapport à ladite entrée de bulles, dans le sens d'écoulement de la pâte sur ladite sortie de bulles ;
- chaque étage comprend une pluralité de passages de bulles juxtaposés sur toute la largeur du chemin de guidage de la pâte;
- ladite pluralité de passages de bulles comportent une entrée de bulles en commun ;
- lesdits passages de bulles comportent un élément allongé dont l'extrémité aval forme ladite sortie de bulles, alors que son extrémité amont est fermée par un élément incliné dans le sens d'écoulement de la pâte ;
- ledit élément allongé présente en coupe une forme en V dont le sommet est dirigé vers le haut ;
- ladite cellule de flottation comporte une sortie secondaire via laquelle la pâte est en outre déviée vers un circuit de recirculation pour être ensuite réinjectée par une entrée secondaire dans l'enceinte, ladite sortie secondaire étant associée à des éléments transversaux permettant de dévier toute ou partie de la pâte vers ledit circuit de recirculation par ladite sortie secondaire ;
- ladite cellule de flottation comprend une zone de séparation des bulles définie dans la partie basse de l'enceinte pour séparer lesdites bulles de la pâte réinjectée par ladite entrée secondaire avant d'être évacuée par ladite sortie principale ;
- ledit circuit de recirculation comprend un château de pâte ;
- ladite sortie principale de la pâte en bas de ladite enceinte est en communication avec un élément tubulaire central par lequel la pâte désencrée est susceptible de monter pour être évacuée de la cellule ;
- ladite sortie principale est reliée audit château de pâte fournissant les acceptés finaux ;
- plusieurs cellules sont disposées en batterie et reliées à un circuit de recirculation commun ;
- toutes les cellules sont reliées à un château de pâte auxiliaire commun disposé en amont desdites entrées principales desdites enceintes.

D'autres caractéristiques et avantages de l'invention ressortiront de la description qui va suivre de deux modes de réalisation non limitatifs de l'invention, en référence aux figures annexées dans lesquelles :
- la figure 1 est un schéma illustrant une cellule de flottation selon l'invention avec indication des sens de circulation de la pâte à papier ;
- la figure 2 est un schéma illustrant une cellule de flottation selon l'invention disposée en série avec d'autres cellules identiques ;
- la figure 3 est un schéma illustrant les voies de circulation de la pâte et des bulles à l'intérieur d'une cellule de flottation selon l'invention;
- la figure 4 est une vue en perspective schématique de l'intérieur d'une cellule de flottation selon l'invention ;
- la figure 5 est une vue en perspective similaire à la vue montrée à la figure 4, tournée de 90° ;
- la figure 6 est une vue schématique en coupe longitudinale de la partie basse d'une cellule selon l'invention ;
- la figure 7 est une vue schématique en coupe transversale de la partie inférieure de la cellule de la figure 6 selon la ligne B-B de celle-ci;
- la figure 8 est un schéma développé illustrant les flux de circulation de la pâte à papier et des bulles d'air entre deux étages d'une cellule selon l'invention ;
- la figure 9 est une vue partielle en perspective et de dessous de l'intérieur d'une cellule selon l'invention ;
- la figure 10 est une vue de dessus d'un étage d'une cellule selon l'invention ;
- les figures 11 est 12 sont des vues en coupe respectivement de dessus de quelques éléments de la figure 10 ;
- la figure 13 est une vue schématique en coupe longitudinal d'un autre mode de réalisation de la cellule selon l'invention ;
- la figure 14 est une vue latérale schématique de la cellule de la figure 13 ;
- la figure 15 montre plus en détail un passage de bulles de la figure 13 ;
- la figure 16 est une vue schématique, partielle et en coupe longitudinale d'un autre mode de réalisation de la cellule selon l'invention ;
- la figure 17 montre plus en détail un passage de bulles de la figure 16 ;

Dans les figures, les éléments identiques ou équivalents porteront les mêmes signes de référence.

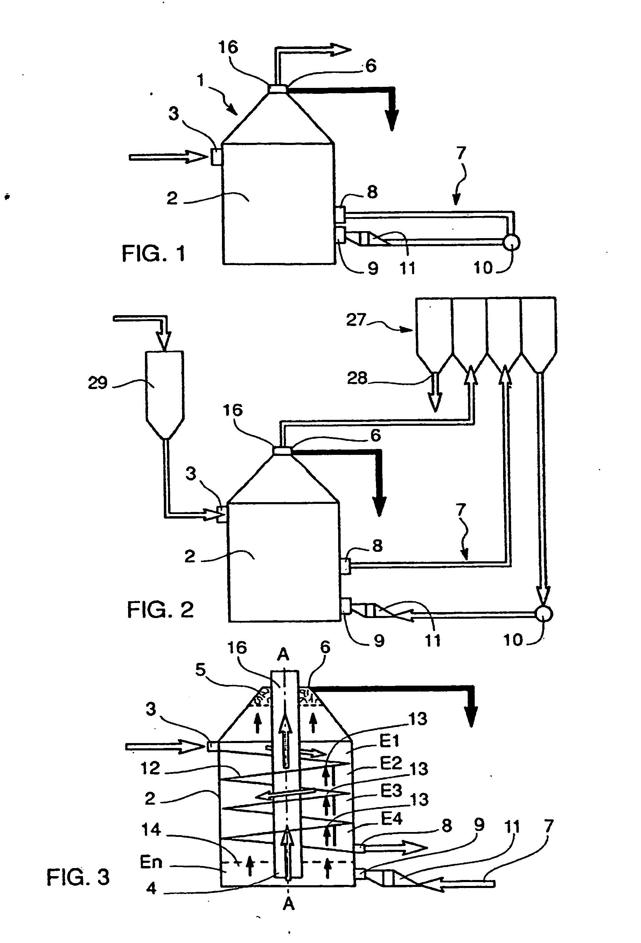

Un premier mode de réalisation de l'invention est illustré sur les figures 1 à 12.

La cellule de flottation 1 comprend une enceinte 2 à axe vertical A-A. Cette enceinte est dans ce premier mode de réalisation cylindrique. Elle comporte dans sa partie haute une entrée principale 3 de la pâte à papier à désencrer et dans sa partie basse une sortie principale 4 de la pâte désencrée.

La pâte à désencrer est alimentée sous une certaine pression dans l'entrée principale 3 et se déplace du haut vers le bas en passant par des étages successifs E1, ... En pour finalement être évacuée par la sortie principale 4.

Lors de son déplacement vers le bas, la pâte passe par ces étages successifs E1, ... En qui dans leur partie supérieure sont pourvus de passages de bulles 13, les bulles étant introduites dans la partie basse de l'enceinte 2. Le nombre 'n' est en général environ 10 et correspond donc à 10 étages.

Les bulles passent par ces passages 13 d'un étage à un étage supérieur, tout en se mélangeant de nouveau avec la pâte dans chaque étage supérieur. Elles montent jusque dans la partie haute dans laquelle elles forment une mousse 5 chargée de particules hydrophobes qui est évacuée par une sortie d'évacuation de mousse 6.

On envoie de préférence un contre-courant d'eau dans la partie haute de la cellule dans le courant de bulles d'air de désencrage après que les bulles aient traversé la pâte et se soient chargées de particules d'encre de sorte que le contre-courant libère les particules (fibres, fines ou charges) entraînées par ces bulles de désencrage et les entraîne avec lui. L'utilisation d'un tel contre-courant d'eau fait l'objet de la demande de brevet FR9715839 déjà mentionné et ne sera pas décrite plus en détail puisqu'elle ne se rapporte pas directement à l'invention.

La cellule de flottation 1 peut être également reliée à un circuit de recirculation 7 de la pâte. En arrivant dans la partie basse de l'enceinte 2 de la cellule, la pâte peut être déviée vers ce circuit de recirculation 7 en sortant par une sortie secondaire 8. La pâte est ensuite réinjectée dans la partie basse de l'enceinte par une entrée secondaire 9. Le circuit de recirculation comporte une pompe 10 et un injecteur d'air 11. L'air est ainsi mélangé à la pâte avant la réinjection de la pâte dans l'enceinte.

De préférence, et comme cela est montré dans les figures, toute la pâte peut être déviée vers le circuit de recirculation et l'ensemble de l'air est ajouté par cet injecteur. Il serait cependant possible de dévier seulement une partie de la pâte vers le circuit de recirculation et également de prévoir une injection d'air complémentaire et séparé dans la partie basse de l'enceinte 2.

Selon une caractéristique importante de l'invention, des moyens de guidage de la pâte 12 sont prévus à l'intérieur de l'enceinte 2, de part et d'autre de l'axe A-A de celle-ci, de manière à former un chemin de guidage. Dans les exemples illustrés sur les figures 1 à 12, le chemin de guidage formé par ces moyens de guidage 12 a une forme hélicoïdale.

Les passages de bulles 13 sont prévus dans ces moyens de guidage 12 qui grâce à leur forme hélicoïdale sont sur leur face inférieure inclinés vers le haut pour le guidage des bulles dégagées de la pâte vers les passages de bulles 13 qui seront décrits plus en détail plus loin.

D'une manière générale, chaque spire de cette forme hélicoïdale définit un étage E avec au moins un passage de bulles 13. Ce passage de bulles 13 forme une entrée pour les bulles en provenance d'un étage inférieur et une sortie de ces bulles vers un étage immédiatement supérieur. La pâte à papier entre au début de chaque étage immédiatement en amont du passage de bulles de l'étage, considéré dans le sens d'écoulement de la pâte. Le chemin de montée des bulles est ainsi entièrement séparé du chemin de descente de la pâte vers la partie basse de l'enceinte 2.

Chaque étage correspond à un cycle de traitement de la pâte avec introduction des bulles par le passage de bulles 13, mélange des bulles à la pâte, séparation des bulles de la pâte, et guidage des bulles vers le passage de bulles conduisant les bulles vers l'étage immédiatement supérieur. Ce cycle est répété dans chaque étage jusqu'à ce que les bulles arrivent dans l'étage le plus haut où elles forment une mousse 5.

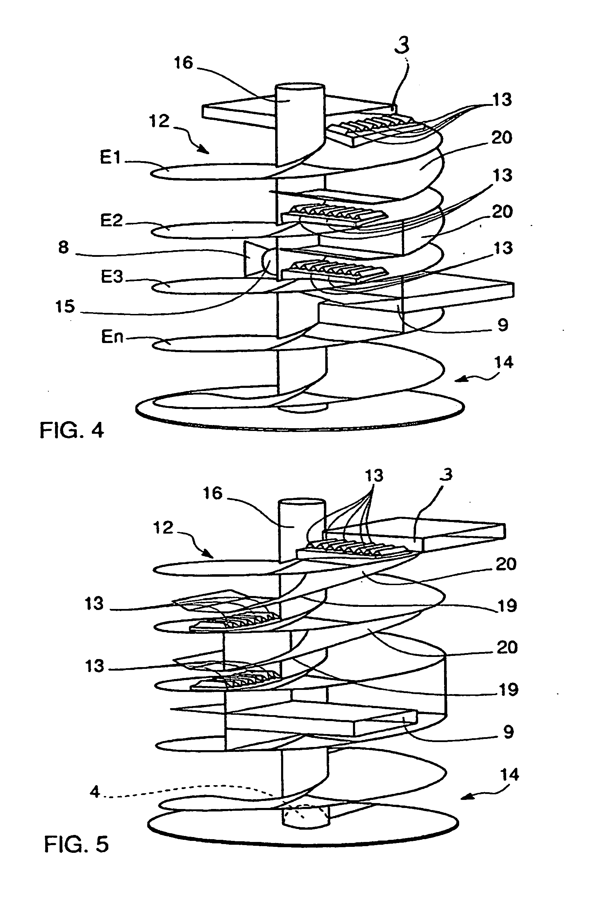

Une zone de séparation des bulles 14 peut être définie dans la partie basse de l'enceinte, entre l'entrée secondaire de la pâte 8 et la sortie principale 4 de la pâte. Par ailleurs, cette zone de séparation comporte, dans l'exemple illustré sur les figures 4 et 5, également des moyens de guidage hélicoïdaux y formant deux spires entières.

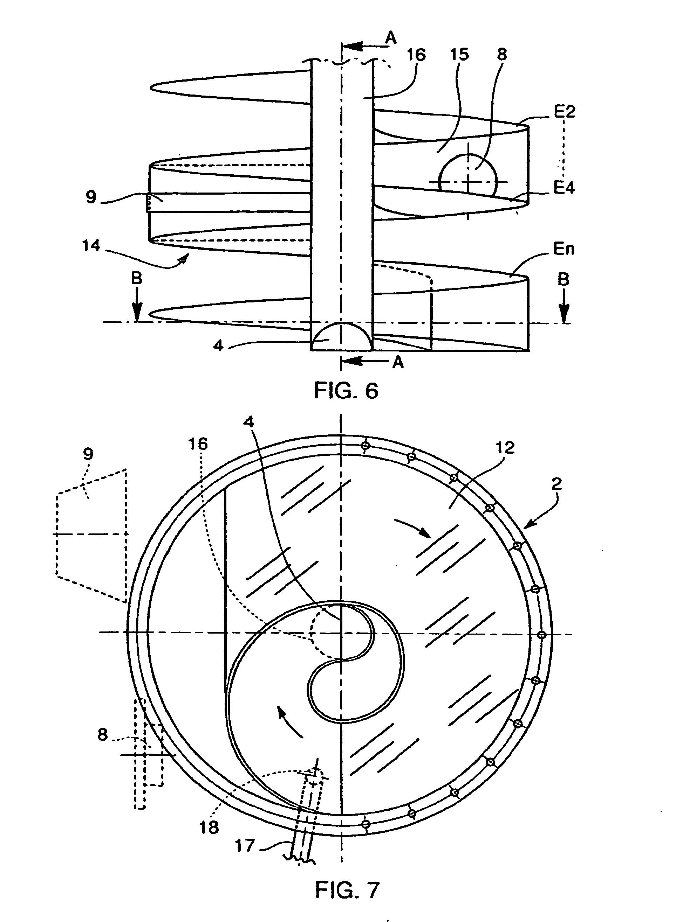

Afin de dévier toute la pâte vers le circuit de recirculation 7, l'enceinte peut être cloisonnée dans sa partie basse par des éléments transversaux 15 associés à la sortie secondaire de pâte 8. Les figures 4 et 6 montrent très schématiquement que ces éléments transversaux sont disposés entre deux spires autour de cette sortie secondaire pour dévier toute la pâte vers le circuit de recirculation 7.

La figure 7 montre le fond de l'enceinte vu dans une coupe suivant la ligne B-B dans la figure 6. L'emplacement de la sortie secondaire de pâte 8 et l'entrée secondaire de pâte 9 sont indiqué en tiretés dans une vue de dessus sur la figure. Cette figure montre qu'à proximité du fond, le chemin de guidage défini par les moyens de guidage 12 est rétréci et dévié vers l'axe A-A de l'enceinte 2 dans lequel la sortie principale 4 se trouve placée. Ainsi, sur 90° de la forme cylindrique de l'enceinte, l'écoulement de la pâte est dévié d'environ 180° pour être dirigé vers cette ouverture de sortie principale 4 placée dans le centre.

L'ouverture principale 4 débouche dans un tube d'évacuation 16 de la pâte. Ce tube 16 s'étend dans l'axe de l'enceinte 2 pour déboucher tout en haut de celle-ci. La figure 1 indique que les acceptés qui quittent ce tube sont ensuite dirigés vers par exemple un cuvier de récupération (non représenté).

De préférence, le premier tronçon à l'intérieur du tube 12 comporte un élément formant auge (non représentée) inclinée d'environ 45° vers le haut pour faciliter la remontée de la pâte dans le tube.

La figure 7 montre par ailleurs un tube de drainage 17 relié à un trou 18 dans le fond de l'enceinte 2 afin de permettre le vidange de celle-ci.

Selon une caractéristique importante de l'invention, des organes de rétrécissement 19 sont prévus dans le chemin de guidage défini par les moyens de guidage 12. Ces organes de rétrécissement sont disposés dans chaque étage de manière à réduire progressivement la section de passage de la pâte immédiatement en amont des passages de bulles 13 de chaque étage de la cellule 1. Cette réduction de la section de passage de la pâte a pour effet de créer une accélération de la vitesse de la pâte à cet endroit bien défini.

Dans l'exemple illustré sur les figures 4, 5 et 9, ces organes de rétrécissement 19 comportent une plaque 20 suspendue à la face inférieure d'un moyen de guidage 12 et qui s'étend dans le sens d'écoulement de la pâte se sorte que la section de passage de la pâte soit réduite au-dessus des passages de bulles 13, suite à quoi la plaque est inclinée vers le haut pour de nouveau élargir la section de passage.

Par un effet Venturi, on crée ainsi une accélération de la vitesse de la pâte qui est maximale à l'endroit des passages de bulles 13 pour aspirer dans la pâte les bulles sortant de ces passages. Il est important que cette accélération de la vitesse de la pâte ait lieu directement avant le mélange des bulles avec la pâte pour ajuster le différentiel de vitesse entre les bulles et la pâte de façon à optimiser l'efficacité de captation des particules hydrophobes de la pâte par les bulles et faciliter la remontée des bulles de l'étage immédiatement inférieur.

Le rapport entre la vitesse de circulation des bulles et la vitesse de circulation de la pâte est avantageusement compris entre 0,5 et 2 et de préférence entre 0,7 et 1,3. Ce rapport peut être obtenu en imprimant à la pâte une vitesse d'environ 1,7 m/s au niveau de l'entrée principale 3, et en imprimant aux bulles une vitesse d'environ 2,1 m/s au niveau de l'injecteur 11, soit un ratio d'environ 1,23.

Ainsi, après le mélange de la pâte qui vient d'être accélérée avec les bulles pénétrant par le passage de bulles 13 et grâce à cette conformation selon l'invention de chaque étage, l'énergie cinétique de la pâte est partiellement transformée en pression statique pour :
a) augmenter le temps de contact entre la pâte et les bulles,
b) faciliter la séparation entre la pâte et les bulles,
c) réduire la perte de pression totale,
d) permettre une nouvelle accélération de la pâte au début de l'étage suivant.

Cela permet à la fois de superposer un grand nombre d'étages tout en ayant une pression statique la plus faible au point d'introduction des bulles dans le but de minimiser la consommation d'énergie.

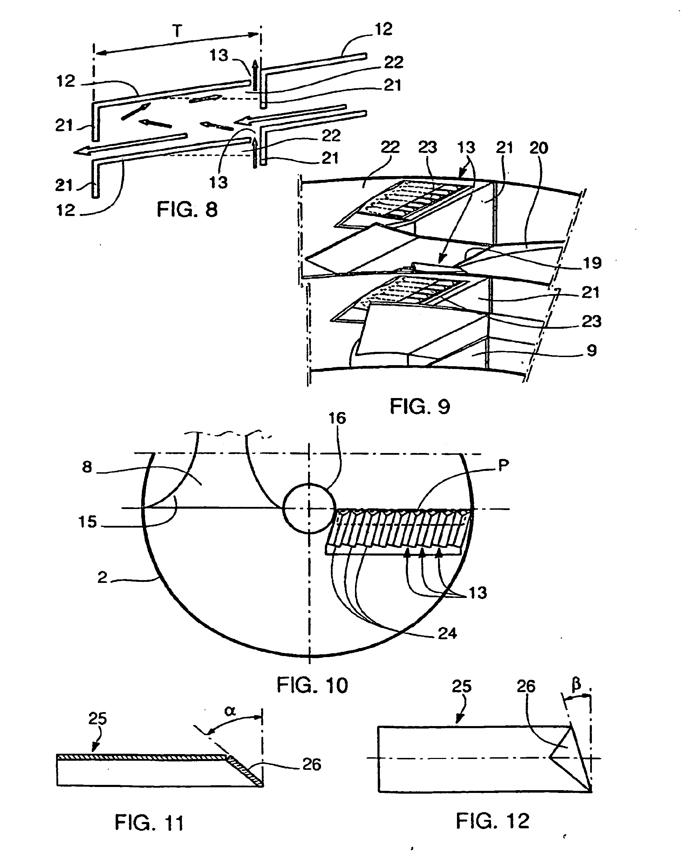

Pour empêcher les bulles dégagées de la pâte de remonter trop loin en suivant la face inférieure des moyens de guidage 12 en forme hélicoïdale, on dispose un organe vertical formant obstacle 21 sur la face inférieure des moyens de guidage immédiatement derrière ces passages de bulles 13 (voir figures 8 et 9).

Grâce à la forme inclinée de cette surface inférieure des moyens de guidage 12, en combinaison avec cet organe formant obstacle 20, est formé un espace libre 22 de concentration des bulles ascendantes immédiatement en dessous de chaque passage de remontée de bulles 13.

La figure 8 montre dans une vue en développée un tour entier (T) ou spire des moyens de guidage 12 avec indications du flux de la pâte par des flèches plus épaisses et plus longues et la remontée des bulles par des flèches plus courtes et plus minces. On y voit que les bulles montantes par un passage de bulles 13 sont d'abord mélangées dans la pâte et entraînées par celle-ci pour ensuite se dégager pour remonter en suivant la face inférieure inclinée de la forme en spirale.

Les passages de bulles 13 comprennent sur chaque étage au moins une entrée de bulles 23 sur la face inférieure des moyens de guidage 12, et au moins une sortie de bulles 24 sur la face supérieure de ceux-ci.

Chaque étage comprend avantageusement une pluralité de passages de bulles 13 juxtaposés sur toute la largeur du chemin de guidage de la pâte pour mieux répartir les bulles dans celle-ci.

Dans les exemples illustrés sur les figures, la sortie de bulles 24 est de chaque passage de bulles 13 décalée vers l'aval par rapport à l'entrée de bulles 23 dans le sens d'écoulement de la pâte sur la sortie de bulles 24.

Ce décalage est obtenu grâce au fait que les passages comportent des éléments allongés 25 disposés dans le sens d'écoulement de la pâte sur la face supérieure des moyens de guidage 12 et dont l'extrémité aval forme la sortie de bulles 24, alors que leur extrémité amont est fermée par un élément 26 incliné d'un angle α dans le sens d'écoulement de la pâte.

En coupe transversale, ces éléments allongés 25 présentent avantageusement une forme en V (ou en ½ lune) dont le sommet est dirigé vers le haut. La face opposée de cette forme en V est dirigée vers le bas et s'étend partiellement sur la face supérieure des moyens de guidage 12 et partiellement sur la sortie de bulles 24.

La figure 10 montre que ces éléments juxtaposés sont légèrement inclinés vers l'axe de l'enceinte 2 pour mieux suivre l'écoulement de la pâte. Pour la même raison, l'élément de fermeture 26 de l'élément allongé 25 est de préférence incliné d'un angle β pour être aligné le long d'un rayon r de l'enceinte 2. On évite de cette manière une perte de charge inutile lorsque la pâte passe sur les éléments allongés 25 formant les passages des bulles 13.

Avec cette utilisation d'une pluralité d'éléments allongés 25 qui chacun définit une sortie de bulles 24, on n'a besoin que d'une seule entrée de bulles 23 qui est en commun pour tous les passages 13.

Pour stabiliser la circulation dans la cellule de flottation, le circuit de recirculation 7 comprend un château de pâte 27 (voir la figure 2) qui reçoit la pâte qui sort par la sortie secondaire 8 de l'enceinte 2 et la renvoie vers l'entrée secondaire 9 de celle-ci, en passant par la pompe 10 et l'injecteur d'air 11. Ce château de pâte reçoit également la pâte qui quitte l'enceinte par la sortie principale 12 après son passage dans la partie basse de l'enceinte. Une partie de la pâte désencrée est remélangée dans le château de pâte avec la pâte en provenance du circuit de recirculation 7, alors que le reste de la pâte désencrée quitte le château de pâte par une sortie 28 sous forme d'acceptés finaux.

La cellule de flottation 1 se prête facilement à une disposition en batterie avec plusieurs cellules du même genre. Toutes les cellules peuvent alors avantageusement être reliées à un circuit de recirculation commun 7. Une seule pompe 10 est par ailleurs nécessaire pour plusieurs injecteurs 11 associés à une cellule respective.

Dans le cas de cette disposition en batterie, toutes les cellules 1 sont en amont des entrées principales 4 avantageusement reliées à un château de pâte auxiliaire 29 utilisé pour bien répartir la pâte vers les cellules différentes.

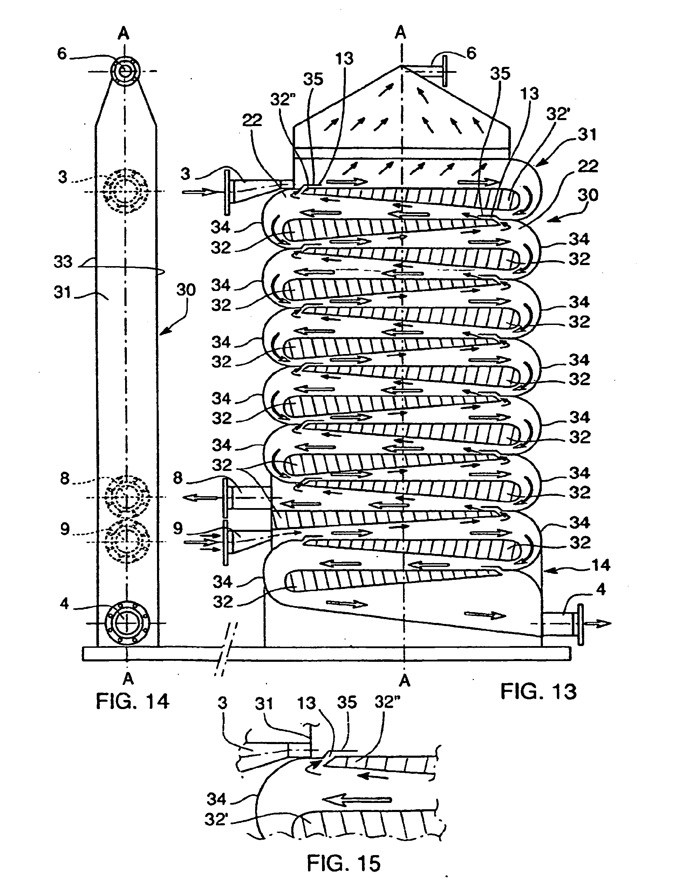

Les figures 13 et 14 montrent schématiquement un deuxième mode de réalisation de la cellule de flottation 30 selon l'invention. Les éléments identiques ou similaires portent les mêmes numéros de référence que les éléments déjà décrits en référence aux figures 1 à 12.

La cellule de flottation 30 comporte une enceinte 31 de forme globalement parallélépipédique, ici rectangulaire et beaucoup plus long que large, à l'intérieur de laquelle sont disposés des moyens de guidage de la pâte de haut vers le bas, d'un étage supérieur vers un étage inférieur. Ces moyens de guidage comportent des éléments transversaux allongés 32 s'étendent de part et d'autre de l'axe A-A de l'enceinte pour former un chemin de guidage en zigzag.

Chaque élément transversal 32 relie deux parois latérales 33 opposées et parallèles l'une à l'autre. Dans l'exemple illustré, chaque élément transversal 32 présente une surface supérieure qui est essentiellement horizontale, alors que sa face inférieure est inclinée vers le haut pour guider les bulles dégagées de la pâte lors de leur déplacement de bas en haut.

Celle (32') des extrémités de l'élément transversal 32 qui est la plus épaisse est arrondie et définit avec une partie de paroi latérale également arrondie 34 la section de passage de la pâte d'un étage supérieur vers un étage inférieur. L'extrémité opposée (32") de l'élément transversal 32, qui est la plus mince, est biseautée et associée à un élément de guidage de bulles 35 qui s'étend devant cette extrémité mince (32") et partiellement au-dessus de la face supérieure de l'élément transversal 32 de manière à former avec celui-ci un passage 13 pour les bulles ascendantes.

Les éléments transversaux 32 sont ainsi disposés alternativement de sorte que l'extrémité épaisse 32' soit toujours disposé au-dessus de l'extrémité mince 32" de l'élément transversal placé immédiatement en dessous de manière à former avec la partie de paroi arrondie 34 des organes de rétrécissement s'étendant à l'intérieur du chemin de guidage de manière à réduire progressivement la section de passage de la pâte immédiatement en amont des passages de bulles 13 de chaque étage de la cellule.

Par ailleurs et tout comme dans le mode de réalisation précédemment décrit, un espace libre de concentration de bulles 22 est créé immédiatement en dessous de chaque passage de bulles 13 par les éléments transversaux 32 et les parties de paroi latérale arrondie 34.

Dans la partie basse, un élément transversal 32 est à l'une de ses extrémité relié à une paroi de l'enceinte 31 de manière à dévier toute la pâte à papier vers une sortie secondaire 8 menant vers un circuit de recirculation 7 comme celui décrit en référence aux figures 1 à 3.

Dans un mode particulier de réalisation de l'invention, les parois du chemin de guidage, formé par lesdits moyens de guidage 13, s'écartent depuis le passage de bulles 13 et dans le sens d'écoulement de la pâte, formant ainsi une légère augmentation de la section du chemin de guidage. Ce dernier présente alors la forme d'un évasement au moins sur une portion s'étendant en aval desdits passages de bulles 13.

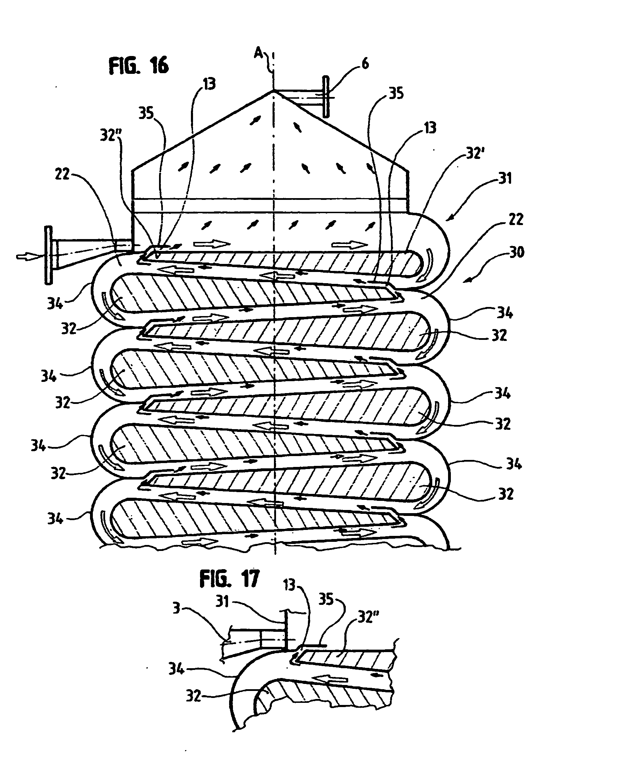

Dans un autre mode particulier de réalisation de l'invention, visible sur les figures 16 et 17, le chemin de guidage formé par ces moyens de guidage 12 comporte une section sensiblement constante au moins sur une portion s'étendant en aval desdits passages de bulles.

La section sensiblement constante du chemin de guidage permet un ralentissement de la pâte par effet de paroi, pour le dégagement des bulles.

Préférentiellement, les moyens de guidage 12 sont, sur leur face supérieure, inclinés vers le haut parallèlement aux surfaces inférieures de façon à former un chemin de guidage 13 ascendant dans le sens d'écoulement de la pâte. Ce chemin de guidage incliné 13 s'étend au moins sur une portion en aval desdits passages de bulles. Cette inclinaison ascendante augmente le ralentissement de la pâte pour le dégagement des bulles.

Les autres éléments de ces modes de réalisation ne seront pas décrit en détail puisqu'ils sont les mêmes que ceux déjà décrits en référence au premier mode de réalisation.

Bien entendu, cette cellule de flottation 30 peut également être disposée en batterie avec plusieurs cellules selon l'invention.

Le fonctionnement des cellules est strictement le même pour le premier et le deuxième modes de réalisation. On introduit la pâte à papier sous pression dans l'enceinte 2, 31 par l'entrée principale 3, suite à quoi elle descend suivant le chemin de guidage par la pression et par gravité jusqu'à ce qu'elle arrive dans la partie basse dans laquelle elle est déviée vers la sortie secondaire 8 pour entrer dans le circuit de recirculation. De ce circuit de recirculation, la pâte passe par une pompe 10 et de l'air est ajouté par un injecteur 11 avant la réinjection de la pâte dans l'enceinte 2, 31 par l'entrée secondaire 9. Dans la zone de séparation de bulles 14 de la partie basse, des bulles sont dégagées de la pâte et remontent en suivant les faces inférieures des moyens de guidage (12; 13) pour arriver dans les passages de bulles 13 vers l'étage immédiatement supérieur dans lequel elles sont remélangées à la pâte pour se charger de particules hydrophobes. Les bulles montent jusqu'en haut de l'enceinte pour y former une mousse évacuée par la sortie de mousse 6. La pâte desencrée quitte l'enceinte par la sortie principale 4 en bas de la partie basse pour être récupérée sous forme d'acceptés finaux, soit directement ou soit après avoir passé de nouveau par le château de pâte.

## Revendications

1. Procédé de désencrage de pâte à papier dans lequel la pâte à désencrer est mise en circulation dans une cellule de flottation (1; 30) comportant une enceinte (2; 31) à axe vertical (A-A), la pâte se déplaçant du haut vers le bas en passant successivement par une pluralité d'étages (E1,... En) dans chacun desquels elle est traversée par des bulles d'air introduites dans la partie basse de l'enceinte et qui se déplacent .de bas en haut en passant par des passages de bulles (13) prévus entre les étages successifs, les bulles se mélangeant avec la pâte et se séparant de nouveau de celle-ci dans chaque étage pour former, arrivées en haut, une mousse (5) chargée de particules hydrophobes qui est évacuée, la pâte à papier désencrée étant évacuée en partie basse de l'enceinte, et lors de son déplacement du haut vers le bas, guidée par des moyens de guidage (12; 32) s'étendant de part et d'autre de l'axe (A-A) de ladite enceinte de manière à former un chemin de guidage dans lequel lesdits passages de bulles (13) sont prévus, les bulles étant, à l'intérieur de chaque étage (En,... E1), susceptibles de remonter en suivant la face inférieure desdits moyens de guidage (12; 32) de manière à arriver dans lesdits passages de bulles (13) pour passer à un niveau supérieur, **caractérisé par le fait qu'**on crée une accélération de la vitesse de la pâte à l'endroit desdits passages de bulles (13) pour ainsi aspirer les bulles sortant desdits passages pour les mélanger avec la pâte, ladite accélération de la pâte étant obtenue en réduisant progressivement la section de passage de la pâte sur lesdits moyens de guidage (12; 32) immédiatement en amont desdits passages de bulles.

2. Procédé de désencrage selon la revendication 1, **caractérisé par le fait que** le rapport entre la vitesse de circulation des bulles et la vitesse de circulation de la pâte est avantageusement compris entre 0,5 et 2, de préférence entre 0,7 et 1,3.

3. Procédé de désencrage selon l'une quelconque des revendications précédentes, **caractérisé par le fait qu'**on dispose lesdits moyens de guidage (12) de manière à former un chemin de guidage hélicoïdal.

4. Procédé de désencrage selon l'une quelconque des revendications précédentes, **caractérisé par le fait qu'**on dispose lesdits moyens de guidage (12) de manière à former un chemin de guidage qui présente la forme d'un évasement au moins sur une portion s'étendant en aval desdits passages de bulles (13).

5. Procédé de désencrage selon l'une quelconque des revendications 1 à 3, **caractérisé par le fait qu'**on dispose lesdits moyens de guidage (12) de manière à former un chemin de guidage de section sensiblement constante au moins sur une portion s'étendant en aval desdits passages de bulles (13).

6. Procédé de désencrage selon l'une quelconque des revendications précédentes, **caractérisé par le fait qu'**on dispose lesdits moyens de guidage (12) de manière à former un chemin de guidage qui est ascendant dans le sens d'écoulement de la pâte et qui s'étend au moins sur une portion en aval desdits passages de bulles (13).

7. Procédé de désencrage selon l'une quelconque des revendications 1 à 5, **caractérisé par le fait qu'**on dispose lesdits moyens de guidage (32) de manière à former un chemin de guidage en zigzag.

8. Procédé de désencrage selon l'une quelconque des revendications précédentes, **caractérisé par le fait qu'**on concentre les bulles dégagées de la pâte dans un espace libre (22) prévu immédiatement en dessous de chaque passage (13) de remontée de bulles.

9. Procédé de désencrage selon l'une quelconque des revendications précédentes, **caractérisé par le fait qu'**on empêche la remontée des bulles immédiatement derrière lesdits passages de bulles (13) pour obliger les bulles à passer directement par lesdits passages.

10. Procédé de désencrage selon l'une quelconque des revendications précédentes, **caractérisé par le fait que** dans chaque étage, les bulles d'air sortant desdits passages de bulles (13) sont réparties sur toute la largeur du chemin de guidage de la pâte.

11. Procédé de désencrage selon l'une quelconque des revendications précédentes, **caractérisé par le fait qu'**on dévie, avant son arrivée en bas, toute ou partie de la pâte vers un circuit de recirculation (7) pour la réinjecter dans ladite partie basse de l'enceinte, lesdites bulles étant en outre séparées de la pâte réinjectée dans une zone de séparation (14) définie dans ladite partie basse de l'enceinte (2; 31).

12. Procédé de désencrage selon la revendication 11, **caractérisé par le fait que** ledit circuit de recirculation (7) dans lequel on fait recirculer la pâte comprend un château de pâte (27).

13. Procédé de désencrage selon l'une quelconque des revendications 1 à 12, **caractérisé par le fait que** l'on évacue la pâte désencrée par une sortie principale (3) en bas de ladite enceinte (2) , ladite sortie principale étant mise en communication avec un élément tubulaire central (16) par lequel la pâte est susceptible de monter.

14. Procédé de désencrage selon la revendication 12, **caractérisé par le fait que** la pâte désencrée est de nouveau alimentée vers ledit château de pâte (27) qui fournit les acceptés finaux.

15. Procédé de désencrage selon l'une quelconque des revendications 11 à 13, **caractérisé par le fait que** l'on place plusieurs cellules (1; 30) en batterie en les reliant à un circuit de recirculation commun (7).

16. Procédé de désencrage selon la revendication 15, **caractérisé par le fait que** l'on relie l'ensemble des cellules (1) à un château de pâte auxiliaire commun (29) que l'on utilise pour répartir la pâte à désencrer avant de l'alimenter vers lesdites cellules.

17. Cellule de flottation pour la mise en oeuvre du procédé selon au moins une des revendications 1 à 16, comprenant une enceinte (2; 31) à axe vertical (A-A) comportant dans sa partie haute une entrée principale (3) pour la pâte à désencrer et dans sa partie basse une sortie principale (4) pour évacuer la pâte désencrée, la pâte se déplaçant du haut vers le bas en passant par des étages successifs (E1, ... En) pourvus de passages de bulles (13) introduites dans la partie basse de l'enceinte (2; 31) et qui passent par lesdits passages (13) d'un étage à un étage supérieur tout en se mélangeant de nouveau avec la pâte, lesdites bulles montant jusque dans la partie haute dans laquelle elles forment une mousse (5) chargée de particules hydrophobes et évacuée par une sortie d'évacuation de mousse (6), ladite cellule comportant des moyens de guidage (12; 32) de la pâte s'étendant de part et d'autre de l'axe (A-A) de ladite enceinte (2; 32) de manière à former un chemin de guidage de la pâte et dans lesquels lesdits passages de bulles (13) sont prévus, lesdits moyens de guidage (12; 32) étant sur leur face inférieure inclinés vers le haut pour le guidage des bulles dégagées de la pâte vers lesdits passages de bulles (13), **caractérisée par le fait que** ladite cellule comporte des organes de rétrécissement (19; 32, 34) s'étendant à l'intérieur du chemin de guidage de manière à réduire progressivement la section de passage de la pâte immédiatement en amont desdits passages de bulles de chaque étage (E1, ... En) de la cellule (1; 30), afin de créer une accélération de la vitesse de la pâte à l'endroit desdits passages de bulles (13) pour ainsi aspirer les bulles sortant desdits passages pour les mélanger avec la pâte.

18. Cellule de flottation selon la revendication 17, **caractérisée par le fait que** ledit chemin de guidage formé par lesdits moyens de guidage (12) a une forme hélicoïdale.

19. Cellule de flottation selon l'une des revendications 17 ou 18, **caractérisée par le fait que** ledit chemin de guidage formé par lesdits moyens de guidage (12) présente la forme d'un évasement au moins sur une portion s'étendant en aval desdits passages de bulles (13).

20. Cellule de flottation selon l'une des revendications 17 ou 18, **caractérisée par le fait que** ledit chemin de guidage formé par lesdits moyens de guidage (12) a une section sensiblement constante au moins sur une portion s'étendant en aval desdits passages de bulles (13).

21. Cellule de flottation selon l'une quelconque des revendications 17 à 20, **caractérisée par le fait que** ledit chemin de guidage formé par lesdits moyens de guidage (12) est ascendant dans le sens d'écoulement de la pâte et s'étend au moins sur une portion en aval desdits passages de bulles (13).

22. Cellule de flottation selon l'une quelconque des revendications 17 à 21, **caractérisée par le fait que** ledit chemin de guidage formé par lesdits moyens de guidage (32) a une forme en zigzag.

23. Cellule de flottation selon l'une quelconque revendications 17 à 22, **caractérisée par le fait que** les bulles dégagées de la pâte sont concentrées dans un espace libre (22) prévu dans chaque étage immédiatement en dessous de chaque passage (13) de remontée de bulles.

24. Cellule de flottation selon la revendication 23, **caractérisée par le fait qu'**elle comporte un organe formant obstacle (21) à la remontée des bulles disposé sur la face inférieure desdits moyens de guidage (12) immédiatement derrière lesdits passages de bulles (13).

25. Cellule de flottation selon la revendication 24, **caractérisée par le fait que** ledit organe formant obstacle (21) relie la face supérieure desdits organes de rétrécissement (19) à la face inférieure des moyens de guidage (12).

26. Cellule de flottation selon l'une quelconque des revendications 17 à 25, **caractérisée par le fait que** les passages de bulles (13) comprennent dans chaque étage (E1, ... En) au moins une entrée de bulles (23) sur la face inférieure des moyens de guidage (12; 32), et au moins une sortie de bulles (24) sur la face supérieure de ceux-ci, ladite sortie de bulles étant décalée vers l'aval par rapport à ladite entrée de bulles( 23), dans le sens d'écoulement de la pâte sur ladite sortie de bulles (24).

27. Cellule de flottation selon la revendication 26, **caractérisée par le fait que** chaque étage (E1, ... En) comprend une pluralité de passages (13) de bulles juxtaposés sur toute la largeur du chemin de guidage de la pâte.

28. Cellule de flottation selon la revendication 27, **caractérisée par le fait que** ladite pluralité de passages de bulles (13) comportent une entrée de bulles (23) en commun.

29. Cellule de flottation selon l'une quelconque des revendications 26 à 28, **caractérisée par le fait que** lesdits passages de bulles (13) comportent un élément allongé (25) dont l'extrémité avale forme ladite sortie de bulles (24), alors que son extrémité amont est fermée par un élément incliné dans le sens d'écoulement de la pâte.

30. Cellule de flottation selon la revendication 29, **caractérisée par le fait que** ledit élément allongé (25) présente en coupe une forme en V ( ou en ½ lune) dont le sommet est dirigé vers le haut.

31. Cellule de flottation selon l'une quelconque des revendication 17 à 30 revendication 16, **caractérisée par le fait qu'**elle comporte une sortie secondaire (8) via laquelle la pâte est en outre déviée vers un circuit de recirculation (7) pour être ensuite réinjectée par une entrée secondaire (9) dans l'enceinte (2; 31), ladite sortie secondaire (8) étant associée à des éléments transversaux (15; 32) permettant de dévier toute ou partie de la pâte vers ledit circuit de recirculation (7) par ladite sortie secondaire (8).

32. Cellule de flottation selon la revendication 31, **caractérisée par le fait qu'**elle comprend une zone de séparation (14) des bulles définie dans la partie basse de l'enceinte (2; 31) pour séparer lesdites bulles de la pâte réinjectée par ladite entrée secondaire (9) avant d'être évacuée par ladite sortie principale (4).

33. Cellule de flottation selon l'une des revendications 31 ou 32, **caractérisée par le fait que** ledit circuit de recirculation (7) comprend un château de pâte (27).

34. Cellule de flottation selon l'une quelconque des revendications à 17 à 33, **caractérisée par le fait que** ladite sortie principale (4) de la pâte en bas de ladite enceinte est en communication avec un élément tubulaire central (16) par lequel la pâte désencrée est susceptible de monter pour être évacuée de la cellule.

35. Cellule de flottation selon la revendication 33, **caractérisée par le fait que** ladite sortie principale (4) est reliée audit château de pâte (27) fournissant les acceptés finaux.

36. Dispositif de flottation , **caractérisé par le fait qu'**il comporte plusieurs cellules (1; 30) selon l'une des revendications 31 à 35 disposées en batterie et reliées à un circuit de recirculation commun (7).

37. Dispositif de flottation selon la revendication 36, **caractérisé par le fait que** toutes les cellules (1; 30) sont reliées à un château de pâte auxiliaire commun (29) disposé en amont desdites entrées principales (3) desdites enceintes (2; 31).

## Claims

1. Method for de-inking paper pulp wherein the pulp to be de-inked is placed in circulation in a flotation cell (1; 30) including an enclosure (2; 31) with vertical axis (A-A), the pulp moving from the top downwards passing successively through a plurality of stages (El, ... En) in each one of which it is crossed by air bubbles introduced in the lower portion of the enclosure and that move from the bottom upwards passing through bubble passages (13) provided between the successive stages, the bubbles mixing with the pulp and getting separated again from the latter in each stage so as to form, when they arrive in the upper portion, a froth (5) charged with hydrophobic particles, which is evacuated, the de-inked paper pulp being evacuated in the lower portion of the enclosure, and, during its displacement from the top downwards, guided by guiding means (12; 32) extending on both sides of the axis (A-A) of said enclosure so as to form a guiding path in which said bubble passages (13) are provided, the bubbles being, within each stage (En, ...El), capable of going back up following the lower face of said guiding means (12; 32) so as to arrive in said bubble passages (13) in order to pass to a higher level, wherein an acceleration of the speed of the pulp is created at the location of said bubble passages (13) so as to suck up the bubbles exiting said passages in order to mix them with the pulp, said acceleration of the pulp being obtained by progressively reducing the cross-section of passage of the pulp on said guiding means (12; 32) immediately upstream of said bubble passages.

2. Method for de-inking according to claim 1, wherein the ratio between the speed of circulation of the bubbles and the speed of circulation of the pulp is advantageously comprised between 0.5 and 2, preferably between 0.7 and 1.3.

3. Method for de-inking according to any of the preceding claims, wherein said guiding means (12) are arranged so as to form a helical guiding path.

4. Method for de-inking according to any of the preceding claims, wherein said guiding means (12) are arranged so as to form a guiding path having the shape of a flare at least over a portion extending downstream said bubble passages (13).

5. Method for de-inking according to any of claims 1 through 3, wherein said guiding means (12) are arranged so as to form a guiding path of a substantially constant cross-section at least over a portion extending downstream of said bubble passages (13).

6. Method for de-inking according to any of the preceding claims, wherein said guiding means (12) are arranged so as to form a guiding path that is ascending in the direction of flowing of the pulp and that extends at least over a portion downstream of said bubble passages (13).

7. Method for de-inking according to any of claims 1 through 5, wherein said guiding means (32) are arranged so as to form a zigzag guiding path.

8. Method for de-inking according to any of the preceding claims, wherein the bubbles issued from the pulp are concentrated in a free space (22) provided immediately under each ascending bubble passage (13).

9. Method for de-inking according to any of the preceding claims, wherein the ascent of the bubbles is stopped immediately behind said bubble passages (13) in order to force the bubbles to pass directly through said passages.

10. Method for de-inking according to any of the preceding claims, wherein in each stage air bubbles exiting said bubble passages (13) are distributed over the whole width of the guiding path of the pulp.

11. Method for de-inking according to any of the preceding claims, wherein the whole or part of the pulp is detoured, before it arrives in the lower portion, toward a recirculation circuit (7) in order to re-inject it into said lower portion of the enclosure, said bubbles being further separated from the re-injected pulp in a separation zone (14) defined in said lower portion of the enclosure (2; 31).

12. Method for de-inking according to claim 11, wherein said recirculation circuit (7) in which the pulp is recirculated includes a pulp tower (27).

13. Method for de-inking according to any of claims 1 through 12, wherein the de-inked pulp is evacuated through a main outlet (3) in the lower portion of said enclosure (2), said main outlet being placed in communication with a central tubular element (16) through which the pulp is capable of going up.

14. Method for de-inking according to claim 12, wherein de-inked pulp is fed again to said pulp tower (27) which supplies the final materials.

15. Method for de-inking according to any of claims 11 through 13, wherein several cells (1; 30) are placed in a battery while connecting them to a common recirculation circuit (7).

16. Method for de-inking according to claim 15, wherein the set of cells (1) is connected to a common auxiliary pulp tower (29) used for distributing the pulp to be de-inked before feeding it toward said cells.

17. Flotation cell for the implementation of the method according to at least one of the claims 1 through 16, comprising an enclosure (2; 31) with a vertical axis (A-A) including in its upper portion a main inlet (3) for the pulp to be de-inked and in its lower portion a main outlet (4) for evacuating the de-inked pulp, the pulp moving from the top downwards passing through successive stages (El, ... En) provided with passages for the bubbles (13) introduced in the lower portion of the enclosure (2; 31) and passing through said passages (13) from one stage to a higher stage while mixing again with the pulp, said bubbles rising up to the upper portion in which they form a froth (5) charged with hydrophobic particles and evacuated through a froth evacuation outlet (6), said cell including means (12; 32) for guiding the pulp extending on both sides of the axis (A-A) of said enclosure (2; 32) so as to form a guiding path for the pulp and in which said bubble passages (13) are provided, said guiding means (12; 32) being inclined, on their lower face, upwards for guiding the bubbles issued from the pulp toward said bubble passages (13), wherein said cell includes narrowing organs (19; 32, 34) extending inside the guiding path so as to progressively reduce the cross-section of passage of the pulp immediately upstream of said bubble passages of each stage (El, ... En) of the cell (1; 30), so as to create an acceleration of the speed of the pulp at the location of said bubble passages (13) in order to suck up the bubbles exiting said passages so as to mix them with the pulp.

18. Flotation cell according to claim 17, wherein said guiding path formed by said guiding means (12) has a helical shape.

19. Flotation cell according to one of claims 17 or 18, wherein said guiding path formed by said guiding means (12) has the shape of a flare at least over a portion extending downstream of said bubble passages (13).

20. Flotation cell according to one of claims 17 or 18, wherein said guiding path formed by said guiding means (12) has a substantially constant cross-section at least over a portion extending downstream of said bubble passages (13).

21. Flotation cell according to any of claims 17 through 20, wherein said guiding path formed by said guiding means (12) is ascending in the direction of flowing of the pulp and extends at least over a portion downstream of said bubble passages (13).

22. Flotation cell according to any of claims 17 through 21, wherein said guiding path formed by said guiding means (32) is shaped in zigzag.

23. Flotation cell according to any of claims 17 through 22, wherein the bubbles issued from the pulp are concentrated in a free space (22) provided in each stage immediately under each ascending bubbles passage (13).

24. Flotation cell according to claim 23, wherein it includes an organ forming a hindrance (21) for the ascent of the bubbles arranged on the lower face of said guiding means (12) immediately behind said bubble passages (13).

25. Flotation cell according to claim 24, wherein said organ forming a hindrance (21) connects the upper face of said narrowing organs (19) to the lower face of the guiding means (12).

26. Flotation cell according to any of claims 17 through 25, wherein the bubble passages (13) comprise in each stage (El, En) at least one bubble inlet (23) on the lower face of the guiding means (12; 32), and at least one bubble outlet (24) on the upper face of the latter, said bubble outlet being displaced downstream with respect to said bubble inlet (23), in the direction of flowing of the pulp on said bubble outlet (24).

27. Flotation cell according to claim 26, wherein each stage (El, ... En) includes a plurality of bubble passages (13) juxtaposed all over the width of the pulp guiding path.

28. Flotation cell according to claim 27, wherein said plurality of bubble passages (13) includes a common bubble inlet (23).

29. Flotation cell according to any of claims 26 through 28, wherein said bubble passages (13) include an elongated element (25) whose downstream end forms said bubbles outlet (24), whereas its upstream end is closed by an element inclined in the direction of flowing of the pulp.

30. Flotation cell according to claim 29, wherein said elongated element (25) has a V-shaped (or half-moon) cross-section, whose vertex is directed upwards.

31. Flotation cell according to any of claims 17 through 30 and claim 16, wherein it includes a secondary outlet (8) through which the pulp is further detoured toward a recirculation circuit (7) to be re-injected afterwards through a secondary inlet (9) into the enclosure (2; 31), said secondary outlet (8) being associated to transverse elements (15; 32) permitting to detour the whole or part of the pulp toward said recirculation circuit (7) through said secondary outlet (8).

32. Flotation cell according to claim 31, wherein it includes a zone (14) for separating the bubbles defined in the lower portion of the enclosure (2; 31) designed to separate said bubbles from the re-injected pulp through said secondary inlet (9) before being evacuated through said main outlet (4).

33. Flotation cell according to one of claims 31 or 32, wherein said recirculation circuit (7) includes a pulp tower (27).

34. Flotation cell according to any of claims 17 through 33, wherein said main outlet (4) of the pulp in the lower portion of said enclosure is in communication with a central tubular element (16) through which de-inked pulp is capable of going up so as to be evacuated from the cell.

35. Flotation cell according to claim 33, wherein said main outlet (4) is connected with said pulp tower (27) supplying the final materials.

36. Flotation device wherein it includes several cells (1; 30) according to one of claims 31 through 35 arranged in a battery and connected to a common recirculation circuit (7).

37. Flotation device according to claim 36, wherein all cells (1; 30) are connected to a common auxiliary pulp tower (29) arranged upstream of said main inlets (3) of said enclosures (2; 31).

## Patentansprüche

1. Verfahren zum Deinken von Papierzellstoff, bei welchem der zu deinkende Zellstoff in einer Flotationszelle (1; 30) in Umlauf gebracht wird, die eine Kammer (2; 31) mit vertikaler Achse (A-A) umfasst, wobei der Zellstoff von oben nach unten wandert, indem er aufeinander folgend durch mehrere Stufen (E1... En) hindurchgeht, wobei er in jeder von diesen von Luftbläschen durchströmt wird, die in den unteren Teil des Behälters eingeblasen werden, und die sich von unten nach oben bewegen, indem sie durch Bläschendurchgänge (13) hindurchwandern, die zwischen den aufeinander folgenden Stufen vorgesehen sind, wobei sich die Bläschen mit dem Zellstoff vermischen und sich erneut von diesem in jeder Stufe trennen, um, oben angelangt, einen mit hydrophoben Partikeln beladenen Schaum (5) zu bilden, der abgezogen wird,
wobei der deinkte Papierzellstoff im unteren Teil der Kammer entfernt sei und bei seiner Wanderung von oben nach unten durch Führungsmittel (12; 32) gelenkt sei, die sich beiderseits von der Achse (A-A) der besagten Kammer erstrecken, derart, um eine Lenkungsstrombahn zu bilden, in welcher die besagten Bläschenübergänge (13) vorgesehen sind, seiend die Bläschen im Innern von jeder Stufe (En.... E1) imstande, um, folgend der unteren Seite der besagten Führungsmittel (12; 32), aufwärts zu steigen, derart, um in den besagten Bläschendurchgängen (13) zu gelangen, um zu einem höher liegenden Bereich hindurchzugehen, **dadurch gekennzeichnet, dass** in dem Bereich der besagten Bläschendurchgänge (13) eine Beschleunigung der Geschwindigkeit des Zellstoffs geschafft wird, um solcherart die aus den besagten Durchgängen heraustretenden Bläschen aufzusaugen, um sie mit dem Zellstoff zu vermischen, wobei die besagte Beschleunigung des Zellstoffs erzielt sei, indem der Querschnitt des Zellstoffdurchgangs auf den besagten Führungsmitteln (12; 32) unmittelbar oberhalb der besagten Bläschendurchgänge allmählich reduziert wird.

2. Verfahren zum Deinken nach Anspruch 1, **dadurch gekennzeichnet, dass** das Verhältnis zwischen der Umlaufgeschwindigkeit der Bläschen und der Umlaufgeschwindigkeit des Zellstoffs vorzugsweise zwischen 0,5 und 2, besonders bevorzugt zwischen 0,7 und 1,3 liegt.

3. Verfahren zum Deinken nach irgendeinem der vorgehenden Ansprüche, **dadurch gekennzeichnet, dass** die besagten Führungsmittel (12) derart angeordnet sind, um eine spiralförmige Lenkungsstrombahn zu bilden.

4. Verfahren zum Deinken nach irgendeinem der vorgehenden Ansprüche, **dadurch gekennzeichnet, dass** die besagten Führungsmittel (12) derart angeordnet sind, um eine Lenkungsstrombahn zu bilden, die auf wenigstens einem Teil, der sich unterhalb der besagten Bläschendurchgänge (13) erstreckt, die Form von einer Erweiterung aufweist.

5. Verfahren zum Deinken nach irgendeinem der Ansprüche 1 bis 3, **dadurch gekennzeichnet, dass** die besagten Führungsmittel (12) derart angeordnet sind, um eine Lenkungsstrombahn mit im Wesentlichen konstantem Querschnitt auf wenigstens einem Teil, der sich unterhalb der besagten Bläschendurchgänge (13) erstreckt, zu bilden.

6. Verfahren zum Deinken nach irgendeinem der vorgehenden Ansprüche, **dadurch gekennzeichnet, dass** die besagten Führungsmittel (12) derart angeordnet sind, um eine Lenkungsstrombahn zu bilden, die zu der Abflussrichtung des Zellstoffs hin steigend ist, und die sich zumindest auf einem Teil unterhalb der besagten Bläschendurchgänge (13) erstreckt.

7. Verfahren zum Deinken nach einem der Ansprüche 1 bis 5, **dadurch gekennzeichnet, dass** die besagten Führungsmittel (32) derart angeordnet sind, um eine zickzackförmige Lenkungsstrombahn zu bilden.

8. Verfahren zum Deinken nach irgendeinem der vorgehenden Ansprüche, **dadurch gekennzeichnet, dass** die von dem Zellstoff freigesetzten Bläschen in einem freien Raum (22) konzentriert werden, der unmittelbar unterhalb eines jeden Durchgangs (13) für die Aufwärtsbewegung der Bläschen vorgesehen ist.

9. Verfahren zum Deinken nach irgendeinem der vorgehenden Ansprüche, **dadurch gekennzeichnet, dass** die Aufwärtsbewegung der Bläschen unmittelbar hinter den besagten Bläschendurchgängen (13) verhindert wird, um die Bläschen dazu zu zwingen, direkt durch die besagten Durchgänge hindurchzugehen.

10. Verfahren zum Deinken nach irgendeinem der vorgehenden Ansprüche, **dadurch gekennzeichnet, dass** in jeder Stufe die aus den besagten Bläschendurchgängen (13) heraustretenden Luftbläschen auf der ganzen Breite der Strombahn für die Lenkung des Zellstoffs verteilt sind.

11. Verfahren zum Deinken nach irgendeinem der vorgehenden Ansprüche, **dadurch gekennzeichnet, dass** vor seiner Ankunft unten der gesamte Zellstoff oder ein Teil des Zellstoffs zu einem Wiederumlaufkreislauf (7) hin umgeleitet wird, um ihn wieder in den besagten unteren Teil des Behälters einzuspeisen, wobei die besagten Bläschen außerdem von dem wieder eingespeisten Zellstoff in einer Trennzone (14) getrennt seien, die in dem besagten unteren Teil der Kammer (2; 31) gebildet ist.

12. Verfahren zum Deinken nach Anspruch 11, **dadurch gekennzeichnet, dass** der besagte Wiederumlaufkreislauf (7), in welchen der Zellstoff zurückgeführt wird, einen Zellstoffturm (27) umfasst.

13. Verfahren zum Deinken nach irgendeinem der Ansprüche 1 bis 12, **dadurch gekennzeichnet, dass** der deinkte Zellstoff durch einen Hauptausgang (3) zuunterst in der besagten Kammer (2) beseitigt wird, wobei der besagte Hauptausgang mit einem zentralen röhrenförmigen Bauteil (16) in Verbindung sei, durch welches der Zellstoff geeignet ist, um sich hochzubewegen.

14. Verfahren zum Deinken nach Anspruch 12, **dadurch gekennzeichnet, dass** der deinkte Zellstoff erneut zu dem besagten Zellstoffturm (27) hin zugeführt wird, der die endgültigen Aufnahmen liefert.

15. Verfahren zum Deinken nach irgendeinem der Ansprüche 11 bis 13, **dadurch gekennzeichnet, dass** mehrere Zellen (1; 30) aufgereiht werden, indem sie mit einem gemeinsamen Wiederumlaufkreislauf (7) verbunden werden.

16. Verfahren zum Deinken nach Anspruch 15, **dadurch gekennzeichnet, dass** die Gesamtheit der Zellen (1) mit einem gemeinsamen zusätzlichen Speicherbehälter für Zellstoff (29) verbunden wird, der dazu benutzt wird, um den zu deinkenden Zellstoff zu verteilen, bevor er zu den besagten Zellen hin zugeführt wird.

17. Flotationszelle für die Durchführung des Verfahrens nach wenigstens einem der Ansprüche 1 bis 16, die eine Kammer (2; 31) mit vertikaler Achse (A-A) umfasst, umfassend in ihrem oberen Teil einen Haupteingang (3) für den zu deinkenden Zellstoff und in ihrem unteren Teil einen Hauptausgang (4), um den deinkten Zellstoff zu entfernen, wobei der Zellstoff von oben nach unten wandert, indem er durch aufeinander folgende Stufen (E1... En) hindurchgeht, die mit Durchgängen für die Bläschen (13) ausgestattet sind, die in den unteren Teil der Kammer (2; 31) eingeblasen sind, und die durch die besagten Durchgänge (13) von einer Stufe zu einer anderen, höher liegenden Stufe hindurchwandern, indem sie sich erneut mit dem Zellstoff vermischen, wobei die besagten Bläschen bis zu dem oberen Teil aufwärts steigen, in welchem sie einen Schaum (5) bilden, der mit hydrophoben Partikeln beladen ist, und der durch einen Auslass zur Beseitigung des Schaums (6) abgezogen wird, wobei die besagte Zelle Mittel (12; 32) zur Lenkung des Zellstoffs umfasst, die sich beiderseits von der Achse (A-A) der besagten Kammer (2; 32) erstrecken, derart, um eine Strombahn für die Lenkung des Zellstoffs zu bilden, und in welchen die besagten Bläschendurchgänge (13) vorgesehen sind, seiend die besagten Führungsmittel (12; 32) auf ihrer unteren Seite nach oben geneigt für die Lenkung der von dem Zellstoff freigesetzten Bläschen zu den besagten Bläschendurchgängen (13) hin, **dadurch gekennzeichnet, dass** die besagte Zelle Einengungsorgane (19; 32, 34) umfasst, die sich in dem Inneren der Lenkungsstrombahn erstrecken, derart, um den Querschnitt des Zellstoffdurchgangs unmittelbar oberhalb der besagten Bläschendurchgänge in jeder Stufe (E1... En) der Zelle (1; 30) fortschreitend zu reduzieren, um eine Beschleunigung der Geschwindigkeit des Zellstoffs im Bereich der besagten Bläschendurchgänge (13) zu schaffen, um solcherart die aus den besagten Durchgängen heraustretenden Bläschen aufzusaugen, um sie mit dem Zellstoff zu vermischen.

18. Flotationszelle nach Anspruch 17, **dadurch gekennzeichnet, dass** die besagte Lenkungsstrombahn, die durch die besagten Führungsmittel (12) gebildet ist, eine spiralartige Form aufweist.

19. Flotationszelle nach einem der Ansprüche 17 oder 18, **dadurch gekennzeichnet, dass** die besagte Lenkungsstrombahn, die durch die besagten Führungsmittel (12) gebildet ist, auf wenigstens einem Teil, der sich unterhalb der besagten Bläschendurchgänge (13) erstreckt, die Form von einer Erweiterung aufweist.

20. Flotationszelle nach einem der Ansprüche 17 oder 18, **dadurch gekennzeichnet, dass** die besagte Lenkungsstrombahn, die durch die besagten Führungsmittel (12) gebildet ist, auf wenigstens einem Teil, der sich unterhalb der besagten Bläschendurchgänge (13) erstreckt, einen im Wesentlichen konstanten Querschnitt aufweist.

21. Flotationszelle nach irgendeinem der Ansprüche 17 bis 20, **dadurch gekennzeichnet, dass** die besagte Lenkungsstrombahn, die durch die besagten Führungsmittel (12) gebildet ist, zu der Abflussrichtung des Zellstoffs hin aufsteigend ist und sich zumindest auf einem Teil unterhalb der besagten Bläschendurchgänge (13) erstreckt.

22. Flotationszelle nach irgendeinem der Ansprüche 17 bis 21, **dadurch gekennzeichnet, dass** die besagte Lenkungsstrombahn, die durch die besagten Führungsmittel (32) gebildet ist, eine zickzackartige Form aufweist.

23. Flotationszelle nach irgendeinem der Ansprüche 17 bis 22, **dadurch gekennzeichnet, dass** die von dem Zellstoff freigesetzten Bläschen in einem freien Raum (22) konzentriert werden, der in jeder Stufe unmittelbar unterhalb eines jeden Durchgangs (13) für die Aufwärtsbewegung der Bläschen vorgesehen ist.

24. Flotationszelle nach Anspruch 23, **dadurch gekennzeichnet, dass** sie ein Organ, das ein Hindernis (21) für die Aufwärtsbewegung der Bläschen bildet, umfasst, das auf der unteren Seite der besagten Führungsmittel (12) unmittelbar hinter den besagten Bläschendurchgängen (13) angeordnet ist.

25. Flotationszelle nach Anspruch 24, **dadurch gekennzeichnet, dass** das besagte Organ, das ein Hindernis (21) bildet, die obere Seite der besagten Einengungsorgane (19) mit der unteren Seite der Führungsmittel (12) verbindet.

26. Flotationszelle nach irgendeinem der Ansprüche 17 bis 25, **dadurch gekennzeichnet, dass** die Bläschendurchgänge (13) in jeder Stufe (E1, En) wenigstens einen Bläscheneingang (23) auf der unteren Seite der Führungsmittel (12; 32) und wenigstens einen Bläschenausgang (24) auf der oberen Seite von diesen umfassen, seiend der besagte Bläschenausgang nach unten verschoben hinsichtlich des besagten Bläscheneingangs (23) in der Abflussrichtung des Zellstoffs auf den besagten Bläschenausgang (24).

27. Flotationszelle nach Anspruch 26, **dadurch gekennzeichnet, dass** jede Stufe (E1... En) mehrere Bläschendurchgänge (13) umfasst, die auf der gesamten Breite der Strombahn für die Lenkung des Zellstoffs aneinandergereiht sind.

28. Flotationszelle nach Anspruch 27, **dadurch gekennzeichnet, dass** die besagte Mehrheit von Bläschendurchgängen (13) einen gemeinsamen Bläscheneingang (23) umfasst.

29. Flotationszelle nach irgendeinem der Ansprüche 26 bis 28, **dadurch gekennzeichnet, dass** die besagten Bläschendurchgänge (13) ein verlängertes Bauteil (25) umfassen, dessen untere Ende den besagten Bläschenausgang (24) bildet, während sein oberes Ende durch ein Bauteil geschlossen ist, das zu der Abflussrichtung des Zellstoffs hin geneigt ist.

30. Flotationszelle nach Anspruch 29, **dadurch gekennzeichnet, dass** das besagte verlängerte Bauteil (25) im Querschnitt die Form von einem _{"}V" (oder von einem Halbmond) aufweist, dessen Spitze nach oben gerichtet ist.

31. Flotationszelle nach irgendeinem der Ansprüche 17 bis 30 und nach Anspruch 16, **dadurch gekennzeichnet, dass** sie einen sekundären Ausgang (8) umfasst, durch welchen der Zellstoff außerdem zu einem Wiederumlaufkreislauf (7) hin umgeleitet wird, um anschließend durch einen sekundären Eingang (9) wieder in die Kammer (2; 31) eingespeist zu werden, wobei der besagte sekundäre Ausgang (8) Querbauteilen (15; 32) zugeordnet ist, die es erlauben, den gesamten Zellstoff oder einen Teil des Zellstoffs durch den besagten sekundären Ausgang (8) zu dem besagten Wiederumlaufkreislauf (7) hin umzuleiten.

32. Flotationszelle nach Anspruch 31, **dadurch gekennzeichnet, dass** sie eine Zone zur Trennung (14) der Bläschen umfasst, die in dem unteren Teil der Kammer (2; 31) gebildet ist, um die besagten Bläschen von dem durch den besagten sekundären Eingang (9) wieder eingespritzten Zellstoff vor der Beseitigung durch den besagten Hauptausgang (4) zu trennen.

33. Flotationszelle nach einem der Ansprüche 31 oder 32, **dadurch gekennzeichnet, dass** der besagte Wiederumlaufkreislauf (7) einen Speicherbehälter für Zellstoff (27) umfasst.

34. Flotationszelle nach irgendeinem der Ansprüche von 17 bis 33, **dadurch gekennzeichnet, dass** der besagte Hauptausgang (4) des Zellstoffs zuunterst in der besagten Kammer mit einem zentralen röhrenförmigen Bauteil (16) verbindbar ist, durch welches der deinkte Zellstoff geeignet ist, um sich hochzubewegen, um aus der Zelle entfernt zu werden.

35. Flotationszelle nach Anspruch 33, **dadurch gekennzeichnet, dass** der besagte Hauptausgang (4) mit dem besagten Zellstoffturm (27) verbunden ist, der die endgültigen Aufnahmen liefert.

36. Flotationsvorrichtung, **dadurch gekennzeichnet, dass** sie mehrere Zellen (1; 30) nach irgendeinem der Ansprüche 31 bis 35 umfasst, die aufgereiht und mit einem gemeinsamen Wiederumlaufkreislauf (7) verbunden sind.

37. Flotationsvorrichtung nach Anspruch 36, **dadurch gekennzeichnet, dass** alle Zellen (1; 30) mit einem gemeinsamen zusätzlichen Zellstoffturm (29) verbunden sind, der oberhalb der besagten Haupteingänge (3) der besagten Behälter (2; 31) angeordnet ist.
